# EUROPEAN PATENT APPLICATION

(11) **EP 4 462 058 A1**
(43) Date of publication of application: **13.11.2024**
(21) Application number: 24167189.0
(22) Date of filing: 28.03.2024
(51) Int. Cl.: F28F 1/12, F28F 1/40, F28D 1/04

(54) **HEAT EXCHANGER SYSTEMS AND DEVICES FOR INCREASED DURABILITY**

(30) Priority: 21.04.2023 US 202318304771
(71) Applicant: RTX Corporation, Farmington, CT 06032 (US)
(72) Inventor: AVIDANE, Orin G., Lighthouse Point (US); VINCENT, Tyler G., Portland (US); GAN, Subhadeep, Middletown (US)
(74) Representative: Dehns

(57) **Abstract**

A heat exchanger (400; 401) can comprise: a housing (410; 610); a heat transfer region (460; 660) disposed within the housing (410; 610); and an inlet manifold (440; 640, 641) or an inlet conduit (420; 620, 621) defined at least partially by an interior surface (422, 442; 622, 623, 632, 633, 642, 643) extending axially from a first end of the heat exchanger (400; 401) to an inlet defined by the heat transfer region (460; 660), the inlet manifold (440; 640, 641) or the inlet conduit (420; 620, 621) comprising a protrusion configuration (501) disposed in the interior surface (422, 442; 622, 623, 632, 633). The heat exchanger (400; 401) can further comprise an outlet manifold (450; 650, 651) or an outlet conduit (430; 630, 631) including a protrusion configuration (501) disposed on an interior surface (432, 652, 653) of the outlet manifold (450; 650, 651) or outlet conduit (430; 630, 631).

## Description

### FIELD

The present disclosure relates to heat exchangers, and, more specifically, to heat exchanger systems and devices for reduced pressure loss.

### BACKGROUND

A gas turbine engine typically includes a fan section, a compressor section, a combustor section, and a turbine section. In general, during operation, air is pressurized in the fan and compressor sections, and is mixed with fuel, and burned in the combustor section to generate hot combustion gases. The hot combustion gases flow through the turbine section, which extracts energy from the hot combustion gases to power the compressor section and other gas turbine engine loads.

Gas turbine engines may include various cooling systems that employ heat exchangers. Bypass air may be directed across the heat exchangers as a cooling fluid. A thermal response rate, of inlet and outlet manifolds bringing hot and cold fluids into and out of heat exchangers, can cause large thermal gradients between the heat exchanger core and the inlet and outlet manifolds, which can induce high stress in the respective manifolds.

### SUMMARY

A heat exchanger system is disclosed herein. In various embodiments, the heat exchanger system comprises: a heat exchanger having a housing and a heat transfer region, the heat transfer region disposed in the housing; a first inlet conduit coupled to the heat exchanger and in fluid communication with the heat transfer region; and a first outlet conduit coupled to the heat exchanger and in fluid communication with the heat transfer region, at least one of an interior surface or an exterior surface of the first inlet conduit or the first outlet conduit including a protrusion configuration.

In various embodiments, the protrusion configuration comprises a plurality of protrusions spaced apart axially along the interior surface. In various embodiments, the protrusion configuration comprises rows of the plurality of protrusions spaced apart laterally along the interior surface.

In various embodiments, each protrusion in the plurality of protrusions comprises a first diameter in a X-direction, a second diameter in a Y-direction, and a height of protrusion, the height of protrusion measured from the interior surface to a maximum height of the protrusion. In various embodiments, the first diameter in the X-direction and the second diameter in the Y-direction are each between 0.007 inches (0.18 cm) and 2.9 inches (7.4 cm), and the height of protrusion is between 0.001 inches (0.0025 cm) and 1.5 inches (3.81 cm).

In various embodiments, each protrusion in the plurality of protrusions a continuous rib, and the continuous rib extends in one of a circumferential direction around the interior surface or an angled direction relative to the circumferential direction.

In various embodiments, each protrusion in the plurality of protrusions includes a broken rib, and the broken rib forms one of a V-shape, an angled circumferential and longitudinal line, and a circumferential line on the interior surface.

In various embodiments, the heat exchanger system further comprises: a second inlet conduit coupled to the heat exchanger and in fluid communication with the heat transfer region; and a second outlet conduit coupled to the heat exchanger and in fluid communication with the heat transfer region. In various embodiments, the heat exchanger is configured to be exposed to an airflow over the housing. In various embodiments, the protrusion configuration is disposed on the exterior surface of the first inlet conduit, wherein the first inlet conduit is configured to receive a first fluid having a first temperature, wherein the airflow is configured to be at a second temperature, and wherein the first temperature is greater than the second temperature during operation of the heat exchanger system.

A heat exchanger system is disclosed herein. In various embodiments, the heat exchanger system comprises: a heat exchanger having a housing and a heat transfer region, the heat transfer region disposed in the housing; a first inlet conduit and a first outlet conduit, the first inlet conduit in fluid communication with the first outlet conduit through the heat transfer region; and a second inlet conduit and a second outlet conduit, the second inlet conduit in fluid communication with the second outlet conduit through the heat transfer region, wherein an exterior surface of at least one of the first inlet conduit, the first outlet conduit, the second inlet conduit and the second outlet conduit includes a protrusion configuration.

In various embodiments, the protrusion configuration comprises a plurality of protrusions spaced apart axially along the exterior surface.

In various embodiments, the protrusion configuration comprises rows of the plurality of protrusions spaced apart circumferentially along the exterior surface.

In various embodiments, each protrusion in the plurality of protrusions comprises a first diameter in a X-direction, a second diameter in a Y-direction, and a height of protrusion, the height of protrusion measured from the exterior surface to a maximum height of the protrusion.

In various embodiments, the first diameter in the X-direction and the second diameter in the Y-direction are each between 0.007 inches (0.18 cm) and 2.9 inches (7.4 cm), and the height of protrusion is between 0.001 inches (0.0025 cm) and 1.5 inches (3.81 cm).

In various embodiments, at least one of an interior surface of at least one of the first inlet conduit, the first outlet conduit, the second inlet conduit and the second outlet conduit includes the protrusion configuration.

In various embodiments, the protrusion configuration is configured to reduce a temperature gradient and increase a pressure loss.

A gas turbine engine is disclosed herein. In various embodiments, the gas turbine engine comprises: a heat exchanger comprising a heat transfer region, an inlet manifold and an outlet manifold, the inlet manifold in fluid communication with the outlet manifold through the heat transfer region; a supply conduit; and a return conduit in fluid communication with the supply conduit through the heat transfer region of the heat exchanger, wherein an exterior surface of at least one of the supply conduit, the return conduit comprises a protrusion configuration.

In various embodiments, the protrusion configuration comprises a plurality of protrusions spaced apart axially along the exterior surface. In various embodiments, each protrusion in the plurality of protrusions comprises a first diameter in a X-direction, a second diameter in a Y-direction, and a height of protrusion, the height of protrusion measured from the exterior surface to a maximum height of the protrusion.

In various embodiments, the heat exchanger is configured to receive a first fluid from the inlet manifold and a second fluid from the supply conduit.

In various embodiments, heat is transferred from the first fluid to the second fluid in the heat transfer region.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates a cross-sectional view of an exemplary gas turbine engine, in accordance with various embodiments;
FIG. 2 illustrates a perspective view of a cooling system having a plenum, in accordance with various embodiments;
FIG. 3 illustrates a perspective view of a cooling system having a plenum, in accordance with various embodiments;
FIG. 4A illustrates a perspective view of a heat exchanger, in accordance with various embodiments;
FIG. 4B illustrates a side view of a heat exchanger, in accordance with various embodiments;
FIG. 5A illustrates a top view of an interior surface with a protrusion configuration, in accordance with various embodiments; and
FIG. 5B illustrates a cross-sectional view of the interior surface with a protrusion of the protrusion configuration, in accordance with various embodiments.
FIG. 5C illustrates an elliptical view of the interior surface with a protrusion of the protrusion configuration, in accordance with various embodiments.
FIG. 6 illustrates various protrusion configurations, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface cross hatching lines may be used throughout the figures to denote different parts, but not necessarily to denote the same or different materials.

Throughout the present disclosure, like reference numbers denote like elements. Accordingly, elements with like element numbering may be shown in the figures, but may not necessarily be repeated herein for the sake of clarity.

As used herein, "aft" refers to the direction associated with the tail (e.g., the back end) of an aircraft, or generally, to the direction of exhaust of a gas turbine engine. As used herein a "conduit" includes a tube (e.g., with a circular cross-sectional shape, a racetrack cross-sectional shape, a non-uniform cross-sectional shape etc.). As referred to herein, a "manifold" is integral (i.e., formed from a single piece, or monolithic) with a housing of a heat exchanger. Stated another way, a "manifold" as referred to herein defines an inlet or an outlet of a heat exchanger (e.g., an inlet or an outlet to a heat transfer region of a heat exchanger), in accordance with various embodiments. A "conduit" as referred to herein can include a tube with a circular cross-sectional shape. In this regard, an interior surface can be defined by an inner diameter surface of a tube, and an exterior surface can be defined by an outer diameter surface of the tube, in accordance with various embodiments. In various embodiments, for a tube that is non-uniform or includes a race track shape, the tube can still include a central longitudinal axis that defines a centerline of the respective tube. In this regard, an interior surface can be defined by an inner surface of the tube and an exterior surface can be defined by an outer surface of the tube (i.e., a surface closer in proximity to the central longitudinal axis is the inner surface and is relative to an exterior surface, or outer surface).

A first component that is "radially outward" of a second component means that the first component is positioned at a greater distance away from a central longitudinal axis of the gas turbine engine. A first component that is "radially inward" of a second component means that the first component is positioned closer to the engine central longitudinal axis than the second component. The terminology "radially outward" and "radially inward" may also be used relative to reference axes other than the engine central longitudinal axis.

Disclosed herein are systems and apparatuses for improving durability of a heat exchanger and adjacent components thereof. Although disclosed herein with reference to gas turbine engines, the present disclosure is not limited in this regard. For example, any heat exchanger used in any type of application is within the scope of this disclosure. In various embodiments, an interior surface, or an exterior surface, of an inlet manifold and/or an outlet manifold for a heat exchanger comprises a protrusion configuration. In various embodiments, the protrusion configuration is configured to reduce a transient response time of the respective manifold. Stated another way, the protrusion configuration can prevent a structural concern arising from thermal stress due to a temperature difference between the inlet manifold that supplies hot air to the heat exchanger and the heat exchanger during operation. In this regard, the protrusion configuration may reduce a stress (i.e., a stress due to low-cycle fatigue, stress from a transient condition, or the like) during operation. In various embodiments, the protrusion configuration can be configured to reduce thermal gradients in increasing temperature transient or in a decreasing temperature transient. The present disclosure is not limited in this regard.

In various embodiments, the inlet manifold and/or the outlet manifold can be integral and monolithic with the heat exchanger. In various embodiments, the inlet manifold and/or the outlet manifold can be configured to be coupled to the heat exchanger. The present disclosure is not limited in this regard.

Heat exchanger systems, as disclosed herein, include, in various embodiments, a heat exchanger and a plurality of manifolds and/or fluid conduits in fluid communication with the heat exchanger. The heat exchanger, in various embodiments, defines a heat transfer region disposed within a housing, the heat transfer region configured to transfer heat between two fluids (e.g., that are supplied and exhausted through respective manifolds in the plurality of manifolds). A heat exchanger system is typically designed and configured to achieve a desired amount of heat transfer within the heat transfer region of the heat exchanger. Although manifolds are used for supplying and exhausting fluids, which are transferring heat in the heat transfer region of the heat exchanger, the manifolds themselves are typically not designed or configured with heat transfer features, such as turbulators, fins, protrusions, corrugations, etc. In particular, adding heat transfer features to the manifolds that supply and exhaust fluids from a heat exchanger core would increase cost and not provide much, if any, of a performance benefit within the heat transfer region of the heat exchanger core. However, by adding a protrusion configuration as disclosed herein selectively to manifolds in a heat exchanger system, a temperature gradient of the respective manifold can be reduced, with a potential minor degradation in performance, and in turn a stress of the manifold can be reduced, resulting in a more durable heat exchanger system, in accordance with various embodiments. Stated another way, heat exchanger cores that transfer a large amount of heat can result in significant temperature gradients between the manifold and heat exchanger core (in rigid connection), which can cause structural concerns (e.g., low-cycle fatigue of the like) due to differences in thermal growth between the two. To address these structural concerns, a protrusion configuration can be added to a respective manifold to reduce stress, with a potential minor increase in pressure loss. In various embodiments, the enhanced heat transfer that results from the protrusion configuration in the manifold may be additive to overall heat transfer capability of the heat exchanger assembly.

In various embodiments, the protrusion configuration can be on an interior surface of a respective manifold and/or an exterior surface of a respective manifold. In various embodiments, by providing the protrusion configuration on an interior surface of the manifold, a thermal response rate of the manifold can be increased, thereby increasing performance and/or the protrusion configuration can increase a heat transfer of the manifold, thereby increasing performance. In various embodiments, by having the protrusion configuration on an exterior surface of a respective manifold, a thermal gradient between the heat exchanger core and the respective manifold can be reduced, thereby significantly reducing stress and/or increasing durability.

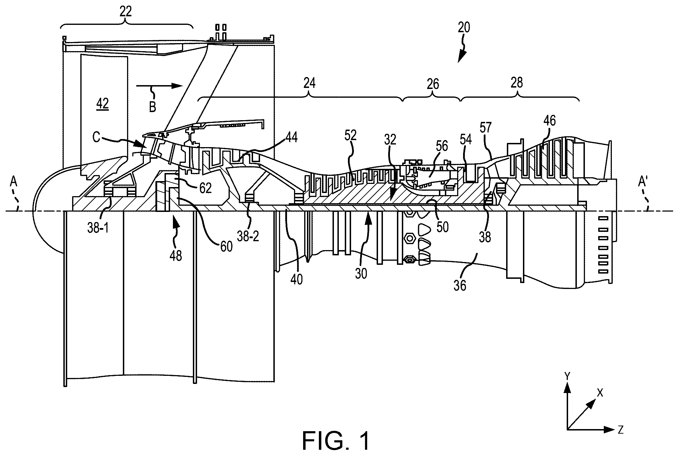

In various embodiments and with reference to FIG. 1, a gas turbine engine 20 is provided. Gas turbine engine 20 may generally include a fan section 22, a compressor section 24, a combustor section 26, and a turbine section 28. In operation, fan section 22 drives fluid (e.g., air) along a bypass flow-path B, while compressor section 24 drives fluid along a core flow-path C for compression and communication into combustor section 26 and then expansion through turbine section 28. Although gas turbine engine 20 is depicted as a turbofan gas turbine engine herein, it should be understood that the concepts described herein are not limited to use with turbofans as the teachings may be applied to other types of turbine engines.

Gas turbine engine 20 may generally comprise a low-speed spool 30 and a high-speed spool 32 mounted concentrically, via bearing systems 38, for rotation about engine central longitudinal axis A-A' and relative to an engine static structure 36. It should be understood that various bearing systems 38 at various locations may alternatively or additionally be provided, including for example, bearing system 38, bearing system 38-1, and bearing system 38-2. Engine central longitudinal axis A-A' is oriented in the z direction on the provided xyz axes. The z direction on the provided xyz axes refers to the axial direction. As used herein, the term "radially" refer to directions towards and away from engine central longitudinal axis A-A' and the z-axis. As used herein, the terms "circumferential" and "circumferentially" refer to directions about central longitudinal axis A-A' and the z-axis.

Low speed spool 30 may generally comprise an inner shaft 40 that interconnects a fan 42, a low-pressure compressor 44, and a low-pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High-speed spool 32 may comprise an outer shaft 50 that interconnects a high-pressure compressor 52 and high-pressure turbine 54. A combustor 56 may be located between high-pressure compressor 52 and high-pressure turbine 54. A mid-turbine frame 57 of engine static structure 36 may be located generally between high-pressure turbine 54 and low-pressure turbine 46. Mid-turbine frame 57 may support one or more bearing systems 38 in turbine section 28. Inner shaft 40 and outer shaft 50 may be concentric and rotate via bearing systems 38 about engine central longitudinal axis A-A', which is collinear with their longitudinal axes. As used herein, a "high pressure" compressor or turbine experiences a higher pressure than a corresponding "low pressure" compressor or turbine. The airflow in core flow-path C may be compressed by low-pressure compressor 44 and high-pressure compressor 52, mixed and burned with fuel in combustor 56, then expanded over high-pressure turbine 54 and low-pressure turbine 46. Turbines 46, 54 rotationally drive the respective low speed spool 30 and high-speed spool 32 in response to the expansion.

The compressor section 24, the combustor section 26, and the turbine section 28 are generally referred to as the engine core. Air is drawn into gas turbine engine 20 through fan 42. Air exiting fan 42 may be divided between core flow-path C and bypass flow-path B. The airflow in bypass flow-path B may be utilized for multiple purposes including, for example, cooling and pressurization.

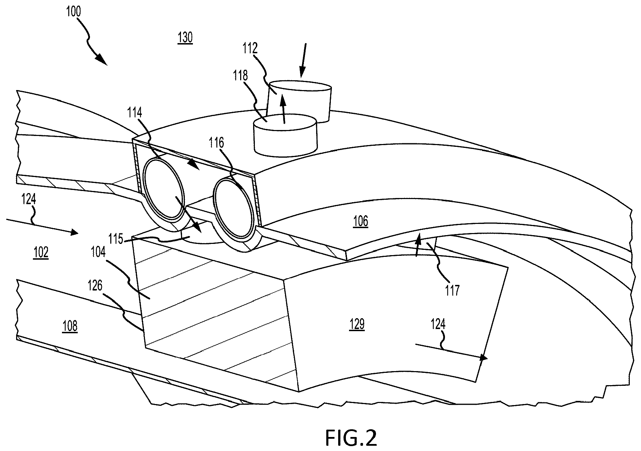

Referring to FIG. 2, and with continued reference to FIG. 1, a cooling system 100 having a heat exchanger 104 is illustrated, in accordance with various embodiments. The heat exchanger 104 may be located between an outer engine case structure 106 and an inner engine case structure 108. Outer engine case structure 106 is radially outward of inner engine case structure 108. Outer engine case structure 106 and inner engine case structure 108 may define a generally annular bypass duct 102 around the engine core. In various embodiments, inner engine case structure 108 may form a portion of engine static structure 36. In various embodiments, air discharged from, for example, fan section 22 may be communicated through the bypass duct 102.

In various embodiments, the cooling system 100 comprises a supply conduit 114 and a return conduit 116. In accordance with various embodiments, an inlet conduit 112 may be fluidly coupled between an external source from an aircraft proximate engine bay 130 and a supply conduit 114. Engine bay 130 may be disposed radially outward from outer engine case structure 106. Supply conduit 114 may extend circumferentially about outer engine case structure 106 and/or form an annular tube. The external source from the aircraft may be disposed radially outward of outer engine case structure 106. Inlet conduit 112 directs hot air (i.e., air to be cooled) to heat exchanger 104. Inlet conduit 112 is fluidly coupled to an inlet conduit 115 of heat exchanger 104. Supply conduit 114 may be fluidly coupled to each heat exchanger 104 by the inlet conduit 115 extending radially inward from supply conduit 114 through outer engine case structure 106.

In accordance with various embodiments, an outlet conduit 118 may be fluidly coupled between an external destination from an aircraft proximate engine bay 130 and return conduit 116. Return conduit 116 may extend circumferentially about outer engine case structure 106 and/or form an annular tube. The external destination from the aircraft may be disposed radially outward of outer engine case structure 106. Outlet conduit 118 directs cool air (i.e., air that is cooled by heat exchanger 104) to the external destination. Outlet conduit 118 is fluidly coupled to an outlet conduit 117 of heat exchanger 104. Return conduit 116 may be fluidly coupled to each heat exchanger 104 by the outlet conduit 117 extending radially inward from return conduit 116 through outer engine case structure 106.

The hot air provided by inlet conduit 112 is cooled in heat exchanger 104 and then returned to the external source from the aircraft through a return conduit 116. Return conduit 116 is fluidly coupled to an outlet conduit 117 of heat exchanger 104 and outlet conduit 118. The cooled air in return conduit 116 may be directed downstream to cool components in thermally challenged regions.

Heat exchanger 104 is configured to receive a cooling airflow, for example, airflow 124. In various embodiments, airflow 124 may be a portion of the bypass airflow in bypass duct 102. Cooling airflow 124 may be directed through an inlet manifold 126 across heat exchanger 104 and out an outlet manifold 129 to cool the air supplied from inlet conduit 115 in heat exchanger 104.

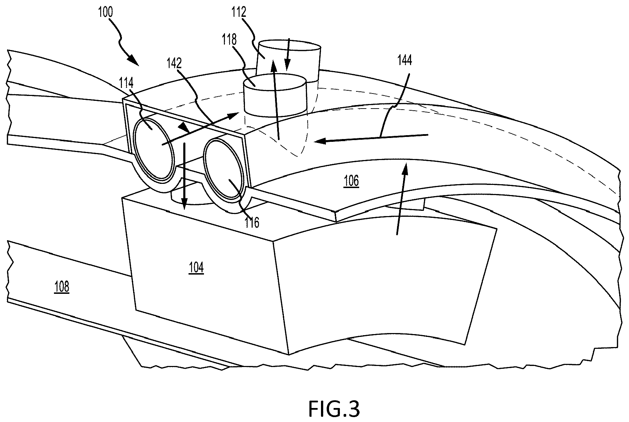

Referring to FIG. 3, a cooling system 100 having a heat exchanger 104 is illustrated, in accordance with various embodiments. In various embodiments, inlet conduit 112 may be integral to supply conduit 114. Similarly, outlet conduit 118 may be integral to return conduit 116. "Integral," as referred to herein is a monolithic component (i.e., formed from a single-piece of a material). In various embodiments, hot air may flow through supply conduit 114 in a first circumferential direction 142 and the return cooler air may flow though return conduit 116 in a second circumferential direction 144. The first circumferential direction 142 and the second circumferential direction 144 may be opposite directions.

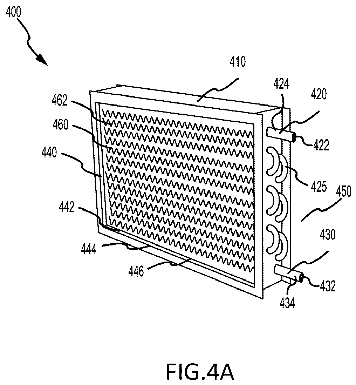

Referring now to FIG. 4A, a perspective view of a heat exchanger 400 is illustrated, in accordance with various embodiments. In various embodiments, the heat exchanger 104 from FIGs. 2 and 3 can be in accordance (i.e., can contain the same features), with the heat exchanger 400 as described further herein. In various embodiments, the heat exchanger 400 comprises a housing 410, an inlet conduit 420, an outlet conduit 430, an inlet manifold 440, an outlet manifold 450, and a heat transfer region 460. "A heat transfer region" as referred to herein is a portion of the heat exchanger where a first fluid (e.g., air, a working fluid or the like) interacts with a second fluid (e.g., air, a working fluid or the like), to transfer heat from the first fluid to the second fluid or vice versa. In various embodiments, the first fluid and the second fluid can be any fluid for use in a heat exchanger. For example, air, water, fuel, oil, or any other fluid utilized in heat exchangers are within the scope of this disclosure.

In various embodiments, the inlet conduit 420 is in fluid communication with the outlet conduit 430 through the heat transfer region 460. For example, a fluid conduit 425 extends through the heat transfer region 460, and potentially out the heat transfer region 460 from the inlet conduit 420 to the outlet conduit 430. Similarly, the inlet manifold 440 is in fluid communication with the outlet manifold 450 through the heat transfer region 460.

In various embodiments, the inlet manifold 440 is defined by an interior surface 442 that extends axially from a first edge 444 disposed at a first axial end of the heat exchanger 400 to a second edge 446 defined by an inlet 462 to the heat transfer region 460. Similarly, in accordance with various embodiments, the outlet manifold 450 is in accordance with the inlet manifold (i.e., with an interior surface that extends axially from a first edge defined by an outlet of the heat transfer region 460 to a second edge defined by a second axial end of the heat exchanger 400).

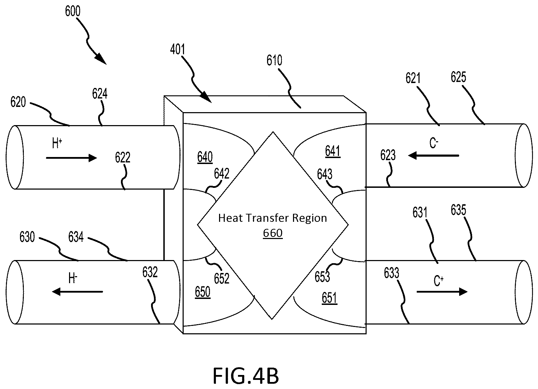

In various embodiments, the inlet conduit 420 comprises an interior surface 422 and an exterior surface 424 and the outlet conduit 430 comprises an interior surface 432 and an exterior surface 434. Although described herein as having an inlet manifold 440 and an outlet manifold 450 with an inlet conduit 420 and an outlet conduit 430, the present disclosure is not limited in this regard. For example, a heat exchanger with two inlet manifolds and two outlet manifolds or a heat exchanger with two inlet conduits and two outlet conduits (e.g., FIG. 4B) are within the scope of this disclosure.

Referring now to FIG. 4B, a side view of a heat exchanger 401 with two inlet conduits (e.g., inlet conduit 620 and inlet conduit 621) and two outlet conduits (e.g., outlet conduit 630 and outlet conduit 631) is illustrated, in accordance with various embodiments. In various embodiments, the inlet conduits 620, 621 are in accordance with the inlet conduit 420, and the outlet conduits 630, 631 are in accordance with the outlet conduit 430 from FIG. 4A.

Heat exchanger systems (e.g., heat exchanger system 600), as disclosed herein, can include a heat exchanger 401 with a heat transfer region 660 and a plurality of fluid conduits (e.g., fluid conduits 620, 621, 630, 631) in fluid communication with the heat exchanger 401. The heat exchanger 401 defines the heat transfer region 660 disposed within a housing 610, the heat transfer region 660 configured to transfer heat between two fluids (e.g., that are supplied and exhausted through respective fluid conduits).

As described previously herein, a heat exchanger system is typically designed and configured to achieve a desired amount of heat transfer within the heat transfer region of the heat exchanger. Although manifolds (or fluid conduits) are used for supplying and exhausting fluids, which are transferring heat in the heat transfer region of the heat exchanger, the manifolds (or fluid conduits) themselves are typically not designed or configured with heat transfer features, such as turbulators, fins, protrusions, corrugations, etc. In particular, adding heat transfer features to the manifolds that supply and exhaust fluids to/from the housing 610 would increase cost and likely add little performance benefit, if any, to the heat transfer that occurs in the heat transfer region 660 (i.e., a design intent of a heat exchanger system). However, by adding a protrusion configuration as disclosed herein selectively to manifolds (or fluid conduits) in a heat exchanger system, a temperature gradient of the respective manifold can be reduced, with a potential minor hit to performance (or minor improvement to performance), and in turn a stress of the manifold can be reduced (i.e., due to a reduction in thermal stress by reducing a temperature gradient), resulting in a more durable heat exchanger system, in accordance with various embodiments. Stated another way, heat exchangers (e.g., heat exchanger 401) that transfer a large amount of heat, can result in significant temperature gradients in manifolds (or fluid conduits) in fluid communication with the heat exchanger 401, which can cause structural concerns. To address the structural concerns, a protrusion configuration can be added to a respective manifold to reduce stress, with a potential minor performance degradation (or potential minor performance improvement), to facilitate greater amounts of heat transfer per unit time in the heat transfer region 660 of the heat exchanger system. Stated another way, increased heat transfer can be achieved in the heat transfer region 660 indirectly, even with a performance degradation by alleviating structural concerns with a protrusion configuration on an interior surface (e.g., interior surface 622, 623, 632, 633) or an exterior surface (e.g., exterior surface 624, 625, 634, 635) of a fluid conduit (e.g., fluid conduit 620, 621, 630, 631).

In various embodiments, by providing the protrusion configuration on an interior surface (e.g., interior surface 622, 623, 632, 633) of the fluid conduit (e.g., fluid conduit 620, 621, 630, 631), a thermal response rate of the manifold can be increased, thereby increasing performance and/or the protrusion configuration can increase a heat transfer of the manifold, thereby increasing performance. In various embodiments, by having the protrusion configuration on an exterior surface (e.g., exterior surface 624, 625, 634, 635) of a fluid conduit (e.g., fluid conduit 620, 621, 630, 631), a thermal gradient between the heat exchanger core and the respective manifold can be reduced (i.e., if a third fluid is flowing over the heat exchanger 401, such as airflow 124 in a bypass duct 102 as shown in in FIG. 2), thereby significantly reducing stress and/or increasing durability.

In various embodiments, the heat exchanger 401 comprises inlet manifolds 640, 641 and outlet manifolds 650, 651. For example, the inlet manifold 640 can be disposed between the inlet conduit 620 and the heat transfer region 660 within the heat exchanger 401. Similarly, the inlet manifold 641 can be disposed between the inlet conduit 621 and the heat transfer region 660, the outlet manifold 650 can be disposed between the outlet conduit 630 and the heat transfer region 660, and the outlet manifold 651 can be disposed between the outlet conduit 631. However, the present disclosure is not limited in this regard. For example, an outlet of the inlet conduit 620 can be the heat transfer region 660 directly and would still be within the scope of this disclosure. In various embodiments, the inlet manifolds 640, 641 each comprise interior surfaces (e.g., interior surface 642 for inlet manifold 640 and interior surface 643 for inlet manifold 641). Similarly, in various embodiments, outlet manifolds 650, 651 each comprise interior surfaces (e.g., interior surface 652 for outlet manifold 650 and interior surface 653 for outlet manifold 651). The interior surface of the manifolds 640, 641, 650, 651 can selectively include a protrusion configuration as described further herein in order to reduce a thermal gradient, thereby reducing a thermal stress, in accordance with various embodiments.

In various embodiments, a first fluid (e.g., a "hot" fluid) is supplied through the inlet conduit 620 to a heat transfer region 660 and exhausted out the outlet conduit 630. Similarly, a second fluid (e.g., a "cold" fluid) is supplied through the inlet conduit 621 to the heat transfer region 660 and out the outlet conduit 631. In response to traversing through the heat transfer region 660, the hot fluid transitions from a first temperature H⁺ in the inlet conduit 620 to a second temperature H⁻ in the outlet conduit 630. Similarly, in response to traversing through the heat transfer region 660, the cold fluid transitions from a first temperature C⁻ to a second temperature C⁺. In this regard, the first temperature H⁺ of the hot fluid is greater than the second temperature H⁻ of the hot fluid, which is greater than the second temperature C⁺ of the cold fluid, which is greater than the first temperature C⁻ of the cold fluid. Stated another way, the cold fluid traveling from the inlet conduit 621 through the heat transfer region 660 and out the outlet conduit 631 is heated up in the heat transfer region 660, and the hot fluid traveling from the inlet conduit 620 through the heat transfer region 660 and out the outlet conduit 630 is cooled down, but the outlet temperature of the hot fluid remains greater than the outlet temperature of the cold fluid, in accordance with various embodiments. For example, an air-to-air heat exchanger may extract the first fluid that is 22 degrees F (12.2 degrees C) above ambient in the inlet conduit 620 and extract a second fluid that is 10 degrees F below (5.6 degrees C) ambient from the inlet conduit 621. As a result, in accordance with various embodiments, the second fluid may be heated up to approximately 15 degrees F (8.3 degrees C) above ambient and exhausted out the outlet conduit 631, and the first fluid may be cooled down to approximately 5 degrees F (2.8 degrees C) above ambient and exhausted out the outlet conduit 630.

In various embodiments a third fluid (e.g., airflow 124 in bypass duct 102 from FIG. 2) can be flowing over the heat exchanger 401. However, the present disclosure is not limited in this regard. For example, the heat exchanger 401 can be disposed in an environment without an airflow and still be within the scope of this disclosure.

In an application where there is the third fluid flowing over the heat exchanger 401, the protrusion configuration, as described further herein, can be disposed on an exterior surface of at least one of the fluid conduits, in accordance with various embodiments. In various embodiments, in response to the third fluid having a temperature that is less than the hot fluid travelling through the inlet conduit 620, a temperature gradient in the inlet conduit 620 can be reduced by including a protrusion configuration on the exterior surface 624 of the inlet conduit 620. In various embodiments, by reducing the temperature gradient in the inlet conduit 620, stresses in the inlet conduit 620 and/or the heat exchanger system 600, can be reduced. In various embodiments, based on the application, it may be desirable to increase the temperature gradient in the inlet conduit 620 (i.e., to increase performance). Accordingly, the protrusion configuration could be included on an interior surface 622 to increase a temperature gradient of the hot fluid as the hot fluid enters the heat transfer region 660, in accordance with various embodiments. Although described with respect to a specific scenario above, one skilled in the art may recognize various situations to include a protrusion configuration on an interior surface or an exterior surface of a fluid conduit to selectively reduce stresses or increase performance in the heat exchanger system and still be within the scope of this disclosure.

In various embodiments, the protrusion configuration described herein can result in a pressure loss in the respective fluid conduit, which is typically undesirable. However, the tradeoff is that the protrusion configuration reduces a thermal gradient experienced by the fluid conduit, which reduces a thermal stress of the fluid conduit, and potentially allowing a greater amount of active heat transfer in the heat transfer region 660 of the heat exchanger 401, in accordance with various embodiments.

Although heat exchangers 400, 401 from FIGs. 4A and 4B are described with respect to an air-to-air heat exchanger, the present disclosure is not limited in this regard. Any fluid-to-fluid heat exchanger is within the scope of this disclosure. For example, various fluids and media may be circulated throughout the heat exchangers 400, 401 from FIGs. 4A and 4B during operation and may carry heat including, without limitation, air, fuel, oil, lubricating fluid, hydraulic fluid, thermally neutral heat-transfer fluid, or any other fluid suitable for circulating through a heat exchanger 400, 401 from FIGs. 4A and 4B.

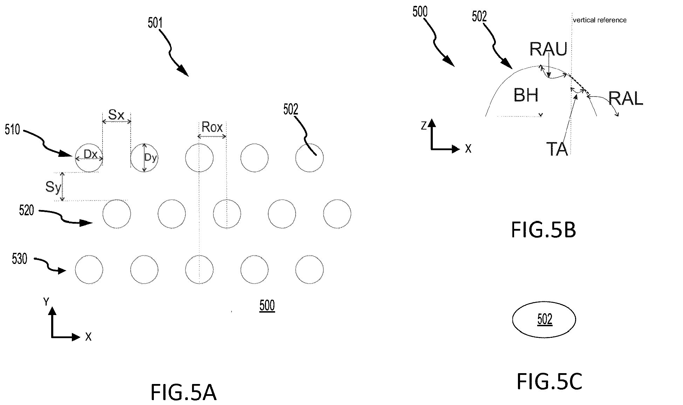

Referring now to FIGs. 5A and 5B, a top view (FIG. 5A) and a cross-sectional view (FIG. 5B) of a surface 500 (e.g., any of interior surfaces 422, 432, 442, 622, 623, 632, 633, 642, 643, 652, 653, an interior surface of outlet manifold 450 from FIGs. 4A and 4B, and/or any of exterior surfaces 624, 625, 634, 635) is illustrated, in accordance with various embodiments. In various embodiments, the surface (e.g., the interior surface or the exterior surface) can be a cylindrical surface (e.g., for inlet conduit 420, 620, 621 and/or outlet conduit 430, 630, 631), a flat surface (e.g., for inlet manifold 440 or outlet manifold 450), or the like. The present disclosure is not limited in this regard.

In various embodiments, the surface 500 comprises a protrusion configuration 501 with a plurality of protrusions (e.g., protrusion 502). In various embodiments, each protrusion (e.g., protrusion 502) can be the same for ease of manufacturing. However, the present disclosure is not limited in this regard, and varying protrusion sizes (i.e., diameter and height) throughout the protrusion configuration 501 is within the scope of this disclosure. In various embodiments, the protrusion 502 comprises a diameter in an X-direction ("Dx") and a diameter in a Y-direction ("Dy"). The X-direction can correspond to an axial direction (i.e., an axial direction of a fluid conduit or an axial direction of a manifold as shown in FIG. 4A), and the Y-direction can correspond to a circumferential direction (i.e., for a fluid conduit) or a lateral direction (i.e., for a manifold defined by a flat surface). From a top view (FIG. 5A), the protrusion 502 can comprise an elliptical shape (e.g., as shown in FIG. 5C), in accordance with various embodiments. Although the protrusion 502 is illustrated as a circular cross-section in an XY plane, the present disclosure is not limited in this regard. For example, diameter Dx can vary between 0.007 inches (0.018 cm) and 2.9 inches (7.366 cm), and diameter Dy can vary between 0.007 inches (0.018 cm) and 2.9 inches (7.366 cm), in accordance with various embodiments.

In various embodiments, protrusions 502 can be spaced apart in the X-direction ("Sx"), and the protrusions 502 can be spaced apart in the Y-direction ("Sy"). For example, Sy and Sx can each vary between 0.001 inches (.0025 cm) and 1.9 inches (4.83 cm). Although illustrated as being spaced apart equally in the x-direction and spaced apart equally in the y-direction, the present disclosure is not limited in this regard. For example, the protrusion configuration 501 can comprise arrays of protrusions (e.g., two or more protrusions 502 spaced close together (e.g., 0.001 inches (0.0025 cm) then a larger gap (e.g., 1 inch (2.54 cm)), then have the pattern repeat.

In various embodiments, the protrusion configuration 501 comprises a plurality of protrusions arranged in rows (e.g., rows 510, 520, 530 as shown in FIG. 5A). In various embodiments, adjacent rows (e.g., rows 510, 520) can be offset in an X direction ("Rox"). In various embodiments, the Rox corresponds to two times the Sx direction.

Referring now to FIG. 5B, a cross-sectional view of a protrusion 502 from FIG. 5A is illustrated, in accordance with various embodiments. In various embodiments, the protrusion 502 further comprise a ramp angle upper ("RAU"), a ramp angle lower ("RAL"), a transition angle ("TA"), and a height of protrusion (e.g., bead height, or "BH"). The RAU is an angle between the surface 500, and an exterior surface of the protrusion 502. The TA is an angle from a vertical reference (i.e., a normal direction from the surface 500), and a tangent line between a vertex defined by the protrusion 502 and the surface 500 and a point defined by the BH. The RAL is an angle between the tangent line and a horizontal plane defined by the BH.

In various embodiments, the protrusion 502 can be a partial sphere. In various embodiments, the protrusion 502 can have a height greater than diameter Dx and diameter Dy or less than diameter Dx and Dy, the present disclosure is not limited in this regard. In various embodiments, the protrusion 502 is configured to induce turbulent flow. In various embodiments, turbulent flow can result in reduced pressure loss relative to laminar flow. In various embodiments, turbulent flow can result in a reduced thermal gradient, thereby reducing a thermal stress of a conduit or manifold, in accordance with various embodiments.

In various embodiments, the RAU can be between 90 degrees and 179 degrees. In various embodiments, the RAL can be between 0 degrees and 90 degrees. In various embodiments, the TA can be between 0 degrees and 89 degrees. In various embodiments, the BE can be between 181 degrees and 270 degrees. In various embodiments, the BH can be between 0.001 inches (0.0025 cm) and 1.5 inches (3.81 cm).

In various embodiments, the surface 500 can be substantially an entire length of an inlet conduit (e.g., inlet conduit 420 from FIG. 4), an outlet conduit (e.g., outlet conduit 430), an inlet manifold (e.g., inlet manifold 440), an outlet manifold (e.g., outlet manifold 450), a supply conduit (e.g., supply conduit 114), a return conduit (e.g., return conduit 116), or the like. The present disclosure is not limited in this regard. In various embodiments, "substantially the entire length" as referred to herein is between 95% and 100% of a total length as measured from a first end of a conduit (or manifold) to a second end of a conduit (or manifold), the second end being proximate (or adjacent) the heat transfer region 460 of a heat exchanger 400 from FIG. 4, in accordance with various embodiments.

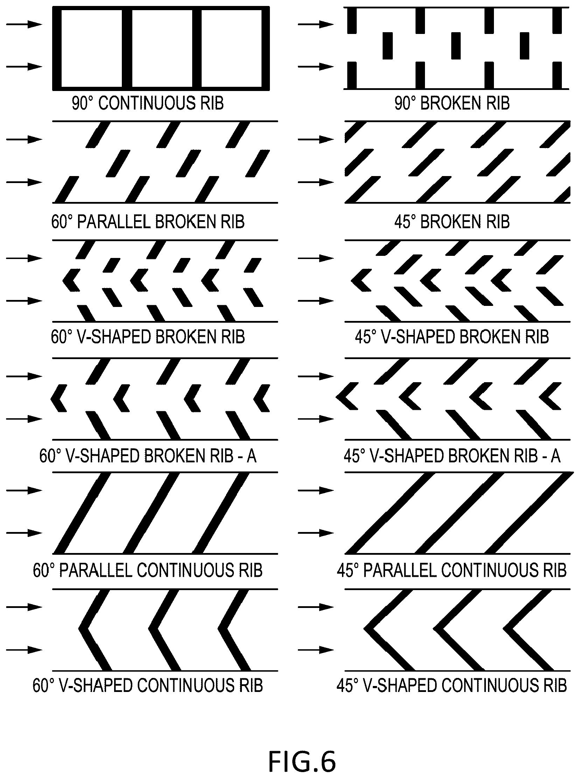

Although described herein as being bead shaped, the protrusion 502 of the protrusion configuration 501 is not limited in this regard. For example, the protrusion configuration 501 can include any protrusions as shown in FIG. 6 (e.g., a 90 degree continuous rib, a 90 degree broken rib, a 60 degree parallel broken rib, a 45 degree parallel broken rib, a 60 degree V-shaped broken rib, a 45 degree V-shaped broken rib, a 60 degree parallel continuous rib, a 45 degree parallel continuous rib, a 65 degree V-shaped continuous rib, a 45 degree continuous rib, or the like). The present disclosure is not limited in this regard. For example, a continuous rib as described herein can extend circumferentially around a surface (e.g., surface 500 from FIG. 5A), and a protrusion configuration can include a plurality of the continuous rib spaced apart longitudinally (i.e., along a central longitudinal axis) of the surface). The continuous rib can be 90 degrees (i.e., entirely circumferential), or non-90 degrees (i.e., spiraling), or the like. The present disclosure is not limited in this regard. Similarly, the broken rib configurations can include portions of a rib defined in a longitudinal and circumferential direction the surface 500 from FIG. 5A, the portions of the rib combining to form a V-shape on the surface (e.g., at an angle between 30 degrees and 90 degrees, or the like). Stated another way, the protrusions can include continuous ribs (e.g., a continuous circumferential rib), a broken rib (e.g., a rib defined by portions of the rib spaced apart circumferentially about a surface, a rib defined by portions of the rib spaced apart circumferentially and longitudinally about a surface, or the like).

In various embodiments, by having a protrusion configuration 501 as disclosed herein, a thermal gradient experienced by a manifold or fluid conduit configured to supply or exhaust fluid from a heat exchanger can be reduced, thereby increasing a durability of the heat exchanger system. In various embodiments, the protrusion configuration 501 can increase a pressure loss, which may appear undesirable, but may facilitate greater heat transfer in a heat transfer region of a heat exchanger by reducing a thermal stress in the system, in accordance with various embodiments.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A heat exchanger system, comprising:
a heat exchanger having a housing and a heat transfer region, the heat transfer region disposed in the housing;
a first inlet conduit coupled to the heat exchanger and in fluid communication with the heat transfer region; and
a first outlet conduit coupled to the heat exchanger and in fluid communication with the heat transfer region, at least one of an interior surface or an exterior surface of the first inlet conduit or the first outlet conduit including a protrusion configuration.

2. The heat exchanger system of claim 1, wherein the protrusion configuration comprises a plurality of protrusions spaced apart axially along the interior surface, optionally wherein the protrusion configuration comprises rows of the plurality of protrusions spaced apart laterally along the interior surface.

3. The heat exchanger system of claim 2, wherein:
each protrusion in the plurality of protrusions comprises a first diameter in a X-direction, a second diameter in a Y-direction, and a height of protrusion, the height of protrusion measured from the interior surface to a maximum height of the protrusion, and
the first diameter in the X-direction and the second diameter in the Y-direction are each between 0.007 inches (0.18 cm) and 2.9 inches (7.4 cm), and the height of protrusion is between 0.001 inches (0.0025 cm) and 1.5 inches (3.81 cm).

4. The heat exchanger system of claim 2 or 3, wherein:
each protrusion in the plurality of protrusions includes a continuous rib, and
the continuous rib extends in one of a circumferential direction around the interior surface or an angled direction relative to the circumferential direction; or wherein each protrusion in the plurality of protrusions includes a broken rib, and
the broken rib forms one of a V-shape, an angled circumferential and longitudinal line, and a circumferential line on the interior surface.

5. The heat exchanger system of any preceding claim, further comprising:
a second inlet conduit coupled to the heat exchanger and in fluid communication with the heat transfer region;
a second outlet conduit coupled to the heat exchanger and in fluid communication with the heat transfer region, and
the heat exchanger is configured to be exposed to an airflow over the housing.

6. The heat exchanger system of claim 5, wherein the protrusion configuration is disposed on the exterior surface of the first inlet conduit, wherein the first inlet conduit is configured to receive a first fluid having a first temperature, wherein the airflow is configured to be at a second temperature, and wherein the first temperature is greater than the second temperature during operation of the heat exchanger system.

7. A heat exchanger system, comprising:
a heat exchanger having a housing and a heat transfer region, the heat transfer region disposed in the housing;
a first inlet conduit and a first outlet conduit, the first inlet conduit in fluid communication with the first outlet conduit through the heat transfer region; and
a second inlet conduit and a second outlet conduit, the second inlet conduit in fluid communication with the second outlet conduit through the heat transfer region, wherein an exterior surface of at least one of the first inlet conduit, the first outlet conduit, the second inlet conduit and the second outlet conduit includes a protrusion configuration.

8. The heat exchanger system of claim 7, wherein the protrusion configuration comprises a plurality of protrusions spaced apart axially along the exterior surface, optionally wherein the protrusion configuration comprises rows of the plurality of protrusions spaced apart circumferentially along the exterior surface.

9. The heat exchanger system of claim 8, wherein:
each protrusion in the plurality of protrusions comprises a first diameter in a X-direction, a second diameter in a Y-direction, and a height of protrusion, the height of protrusion measured from the exterior surface to a maximum height of the protrusion, and
the first diameter in the X-direction and the second diameter in the Y-direction are each between 0.007 inches (0.18 cm) and 2.9 inches (7.4 cm), and the height of protrusion is between 0.001 inches (0.0025 cm) and 1.5 inches (3.81 cm).

10. The heat exchanger system of claim 8 or 9, wherein each protrusion in the plurality of protrusions includes one of a continuous rib and a broken rib.

11. The heat exchanger of any of claims 7 to 10, wherein at least one of an interior surface of at least one of the first inlet conduit, the first outlet conduit, the second inlet conduit and the second outlet conduit includes the protrusion configuration, and/or wherein the protrusion configuration is configured to reduce a temperature gradient and increase a pressure loss.

12. A gas turbine engine, comprising:
a heat exchanger comprising a heat transfer region, an inlet manifold and an outlet manifold, the inlet manifold in fluid communication with the outlet manifold through the heat transfer region;
a supply conduit; and
a return conduit in fluid communication with the supply conduit through the heat transfer region of the heat exchanger, wherein an exterior surface of at least one of the supply conduit, the return conduit comprises a protrusion configuration.

13. The gas turbine engine of claim 12, wherein the protrusion configuration comprises a plurality of protrusions spaced apart axially along the exterior surface.

14. The gas turbine engine of claim 13, wherein each protrusion in the plurality of protrusions comprises a first diameter in a X-direction, a second diameter in a Y-direction, and a height of protrusion, the height of protrusion measured from the exterior surface to a maximum height of the protrusion, and
the first diameter in the X-direction and the second diameter in the Y-direction are each between 0.007 inches (0.18 cm) and 2.9 inches (7.4 cm), and the height of protrusion is between 0.001 inches (0.0025 cm) and 1.5 inches (3.81 cm).

15. The gas turbine engine of any of claims 12 to 14, wherein the heat exchanger is configured to receive a first fluid from the inlet manifold and a second fluid from the supply conduit, optionally wherein heat is transferred from the first fluid to the second fluid in the heat transfer region.
